# EUROPÄISCHE PATENTSCHRIFT

(11) **EP 1 762 592 B1**
(45) Veröffentlichungstag und Bekanntmachung des Hinweises auf die Patenterteilung: **12.10.2016**
(21) Anmeldenummer: 06017758.1
(22) Anmeldetag: 25.08.2006
(51) Int. Cl.: C08K 5/5313, C08L 77/00

(54) **Polymere Formmassen aus Basis von thermoplastischen Polyamiden**
Polymeric compositions based on thermoplastic polyamides
Compositions résineuses à base de polyamides thermoplastiques

(30) Priorität: 03.09.2005 DE 102005041966
(43) Veröffentlichungstag der Anmeldung: 14.03.2007
(73) Patentinhaber: Clariant Produkte (Deutschland) GmbH, 65929 Frankfurt am Main (DE)
(72) Erfinder: Naß, Bernd, 86152 Augsburg (DE); Hörold, Sebastian, 86420 Diedorf (DE); Schacker, Ottmar, 86368 Gersthofen (DE)
(74) Vertreter: Mikulecky, Klaus

(56) Entgegenhaltungen:
- EP-A- 1 568 731
- EP-A- 1 624 015
- EP-A1- 1 522 551
- EP-A2- 1 070 754
- EP-A2- 1 607 400
- WO-A-02/28953
- WO-A-2004/022640
- WO-A-2005/035664
- WO-A-2005/116139

## Beschreibung

### Polymere Formmassen auf Basis von thermoplastischen Polyamiden

Die Erfindung betrifft polymere Formmassen auf Basis von thermoplastischen Polyamiden mit hoher Flammwidrigkeit und hoher Glühdrahtbeständigkeit, ein Verfahren zu ihrer Herstellung und ihre Verwendung.

Insbesondere für thermoplastische Polymere haben sich die Salze von Phosphinsäuren (Phosphinate) als wirksame flammhemmende Zusätze erwiesen (DE-A-2 252 258 und DE-A-2 447 727). Calcium- und Aluminiumphosphinate sind in Polyestern als besonders effektiv beschrieben worden und beeinträchtigen die Materialeigenschaften der Polymerformmassen weniger als z.B. die Alkalimetallsalze (EP-A-0 699 708).

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (PCT/EP 97/01664 sowie DE-A-197 34 437 und DE-A-197 37 727). Die DE-A-196 14 424 beschreibt Phosphinate in Verbindung mit Stickstoffsynergisten in Polyestern und Polyamiden. Unter anderem werden Melamin und Melaminverbindungen als wirksame Synergisten beschrieben, die selbst auch eine gewisse Wirkung in bestimmten Thermoplasten haben, in Kombination mit Phosphinaten aber deutlich wirksamer sind.

Flammschutzmittel - Kombinationen werden in EP-A-1 568 731 und WO-A-02/28953 beschrieben.

Die DE-A-199 33 901 beschreibt Phosphinate in Kombination mit Umsetzungsprodukten von Melamin und Phosphorsäure (Phosphor/Stickstoff-Flammschutzmittel), beispielsweise Melaminpolyphosphat, als Flammschutzmittel für Polyester und Polyamide. Durch die Verwendung von Flammschutzmitteln wie sie in DE-A-199 33 901 beschrieben werden, kann die Stabilität des Polyamids bei der Verarbeitung in der Schmelze beeinflusst werden. Die Stabilität bei der Verarbeitung kann durch den Zusatz von Zinkverbindungen wie Zinkborat, Zinkoxid oder Zinkstearat deutlich verbessert werden (PCT/EP 03/09434).
Zur Verbesserung der Verarbeitungsstabilität können nach PCT/EP 03/09434 auch bestimmte Oxide, Hydroxide, Carbonate, Silikate, Borate, Stannate, gemischte Oxid-Hydroxide, Oxid-Hydroxid-Carbonate, Hydroxid-Silikate oder Hydroxid-Borate oder Mischungen dieser Stoffe zugesetzt werden. Es können beispielsweise Magnesiumoxid, Calciumoxid, Aluminiumoxid, Manganoxid, Zinnoxid, Aluminiumhydroxid, Böhmit, Dihydrotalcit, Hydrocalumit, Magnesiumhydroxid, Calciumhydroxid, Calciumcarbonat, Zinkhydroxid, Zinnoxidhydrat oder Manganhydroxid verwendet werden.

Die Wirksamkeit der Phosphinate und der Stickstoffsynergisten bzw. der Melamin-Phosphorsäure-Umsetzungsprodukte als Flammschutzmittel wird im Wesentlichen anhand der Brandprüfung nach dem UL 94 Vertikaltest beschrieben. Für bestimmte Anwendungen von polymeren Formmassen auf Basis von Polyamiden im Haushaltsgerätebereich ist jedoch das Abschneiden im Glühdrahttest nach IEC 60695-2-13 von Bedeutung, wobei zusätzlich eine hohe Flammwidrigkeit wünschenswert ist. Die Wirksamkeit der Kombinationen It. DE-A-199 33 901 in Polyamiden hinsichtlich der Brandprüfung nach dem UL 94 Vertikaltest ist zufrieden stellend, während die Wirksamkeit im Glühdrahttest nach IEC 60695-2-13 für bestimmte Anwendungen noch unzureichend ist.

Es war daher Aufgabe der vorliegenden Erfindung, polymere Formmassen auf Basis von thermoplastischen Polyamiden zur Verfügung zu stellen, die zugleich eine hohe Flammwidrigkeit und eine hohe Glühdrahtbeständigkeit aufweisen. überraschend wurde gefunden, dass polymere Formmassen auf Basis von thermoplastischen Polyamiden, in denen Phosphinate mit stickstoffhaltigen Synergisten oder Phosphor/Stickstoff-Flammschutzmitteln, unter gleichzeitigem Zusatz von Glasfasern und Talkum, sowie gegebenenfalls dem Zusatz von Zinkverbindungen und weiteren Additiven verwendet werden, beide gestellten Anforderungen erfüllen, während entsprechende Formmassen, die entweder nur Glasfasern oder Talkum aber nicht die Kombination aus beiden Zuschlagstoffen enthalten, nur eine der beiden gestellten Anforderungen erfüllen.

Polyamidformmassen, die sowohl eine hohe Flammwidrigkeit als auch eine hohe Glühdrahtbeständigkeit aufweisen, sind für einen Kunststoffhersteller, Kunststoffcompoundeur oder Verwender vorteilhaft, da die Typenvielfalt auf bestimmte Polyamidformmassen bzw. Polyamidtypen eingeschränkt werden kann. Dies hat insbesondere wirtschaftliche Vorteile, da wegen entfallender Produktwechsel von einer Polyamidformmasse zu einer anderen beispielsweise Reinigungszeiten entfallen und größere Produktmengen einer einheitlichen Polyamidformmasse gefertigt werden können.

Gegenstand der Erfindung sind daher polymere Formmassen auf Basis von thermoplastischen Polyamide, enthaltend
als Komponente A 30 bis 70 Gew.-% eines thermoplastischen Polyamides als Komponente B 2 bis 20 Gew.-% eines Phosphinsäuresalzes der Formel (I) und/oder eines Diphosphinsäuresalzes der Formel (II) und/oder deren Polymeren, 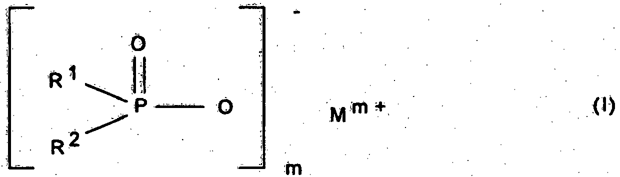 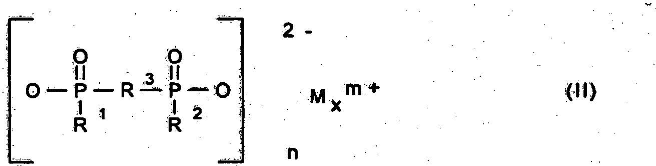 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;

- m: 1 bis 4; n 1 bis 4; x 1 bis 4 bedeuten,
als Komponente C 2 bis 20 Gew.-% eines stickstoffhaltigen Synergisten oder eines Phosphor/Stickstoff-Flammschutzmittels,
als Komponente D 5 bis 60 Gew.-% eines faserförmigen Verstärkungsstoffes,
als Komponente E 2 bis 30 Gew.-% eines Füllstoffes,
als Komponente F 0 bis 5 Gew.-% einer organischen oder anorganischen Zinkverbindung oder Mischungen verschiedener Zinkverbindungen,
als Komponente G 0 bis 5 Gew.-% übliche Zusatzstoffe und Verarbeitungshilfsmittel, wobei die Summe der Komponenten A bis G immer 100 Gew.-% beträgt.

Bevorzugt handelt es sich bei den Polyamiden um Polyamid 6, Polyamid 12, teilaromatische Polyamide und/oder Polyamid 66, wobei Formmassen eingeschlossen sind, die Polyamide enthalten, die durch Copolymerisation zweier oder mehrerer Monomeren erhältlich sind, oder Mischungen mehrerer Polyamide, wobei das Mischungsverhältnis beliebig ist.

Bevorzugt sind R¹, R² der Komponente B gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ der Komponente B Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen.

Bevorzugt handelt es sich bei der Komponente C um eine Stickstoffverbindung der Formeln (III) bis (VIII), 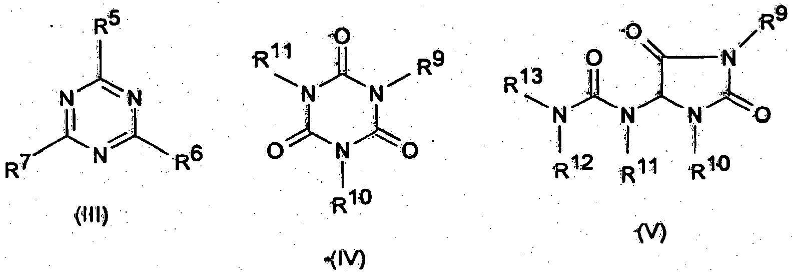 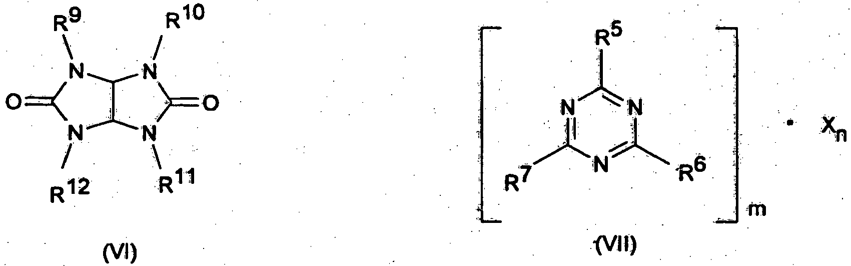 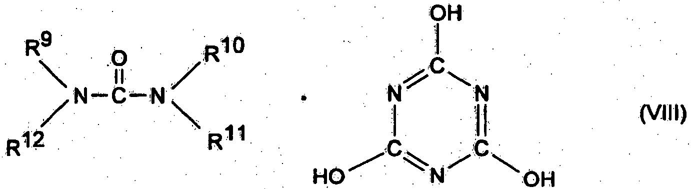 worin
R⁵ bis R⁷ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹ , sowie N-alicyclisch oder N-aromatisch,
R⁸ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten, oder um oligomere Ester des Tris(hydroxyethyl)isocyanurats mit aromatischen Polycarbonsäuren.

Bevorzugt handelt es sich bei der Komponente C um Benzoguanamin, Tris(hydroxyethyl)isocyanurat, Allantoin, Glycouril, Melamin, Melamincyanurat, Harnstoffcyanurat, Dicyandiamid und/oder Guanidin.

Bevorzugt handelt es sich bei den Kondensationsprodukten des Melamins um Melem, Melam, Melon und/oder höherkondensierte Verbindungen davon.

Bevorzugt handelt es sich bei den Umsetzungsprodukten um Dimelaminpyrophosphat, Melaminpolyphosphat, Melempolyphosphat, Melampolyphosphat, Melonpolyphosphat und/oder gemischte Polysalze dieses Typs.

Bevorzugt handelt es bei den Umsetzungsprodukten um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000.

Bevorzugt handelt es sich bei der Komponente D um Glasfasern, insbesondere um Kurzglasfasern oder Endlosstränge (Rovings).

Besonders bevorzugt handelt es sich bei der Komponente E um Talkum.

Bevorzugt handelt es sich bei der Komponente F um Zinkoxid, Zinkborat, Zinksulfid, Zinkstearat und/oder Zinkmontanat.

Bevorzugt handelt es sich bei der Komponente G um Zusatzstoffe und Verarbeitungshilfsmittel wie Pigmente, Farbstoffe, Wachse, Nukleierungsmittel, Gleit- und Entformungshilfsmittel, Weichmacher, Lichtschutzmittel, Stabilisatoren, Antioxidantien, Metalldesaktivatoren, Antistatika oder Mischungen derartiger Additive.

Bevorzugt enthalten die erfindungsgemäßen polymeren Formmassen 40 bis 60 Gew.-% der Komponente A, 4 bis 15 Gew.-% der Komponente B, 4 bis 15 Gew.-% der Komponente C, 15 bis 30 Gew.-% der Komponente D, 6 bis 20 Gew.-% der Komponente E, 0,1 bis 2,5 Gew.-% der Komponente F oder deren Mischungen und 0,1 bis 2,5 Gew.-% der Komponente G oder deren Mischungen.

Die Erfindung betrifft auch die Verwendung der erfindungsgemäßen polymeren Formmassen nach einem oder mehreren der Ansprüche 1 bis 14 zur Herstellung von oder in Formkörpern wie sie in der Elektroindustrie Anwendung finden.

Geeinet sind auch Polyamide vom Aminosäure-Typ und/oder vom Diamin-Dicarbon-säure-Typ, wobei Formmassen eingeschlossen sind, die Polyamide enthalten, die durch Copolymerisation zweier oder mehrerer Monomeren erhältlich sind, oder Mischungen mehrerer Polyamide, wobei das Mischungsverhältnis beliebig ist

R¹, R² der Komponente B können gleich oder verschieden sein und C₁-C₆-Alkyl, linear oder verzweigt und/oder Phenyl bedeuten.

M der Komponente B ist am besten Ca, Al oder Zn.

Geeignet als Komponente C sind auch Kondensationsprodukte des Melamins.

Bei der Komponente C kann es sich auch um Umsetzungsprodukte von Melamin mit Polyphosphorsäure und/oder um Umsetzungsprodukte von Kondensationsprodukten des Melamins mit Polyphosphorsäure oder Gemische davon handeln, wobei dann Melaminpolyphosphat bevorzugt ist.

Bei Komponente D kann es sich auch um Kohlenstofffasem, Kaliumtitanatfasern, Aramidfasern, Naturfasern, Glasgewebe, Glasmatten und/oder Glasfasern handeln.

Bei Komponente E kann es sich auch um amorphe Kieselsäure, Bariumsulfat, Magnesiumcarbonat, Calciumcarbonat, Kaolin, Titandioxid, gepulverter Quarz, Glimmer, Feldspat, Wollastonit, Silikate und/oder Talkum handeln.

Bevorzugt enthalten die erfindungsgemäßen polymeren Formmassen auch 30 bis 70 Gew.-% der Komponente A, 2 bis 20 Gew.-% der Komponente B, 2 bis 20 Gew.-% der Komponente C, 5 bis 60 Gew.-% der Komponente D, 2 bis 30 Gew.-% der Komponente E, 0 bis 5 Gew.-% der Komponente F oder deren Mischungen und 0 bis 5 Gew.-% der Komponente G oder deren Mischungen.

Weiterhin bevorzugt enthalten die erfindungsgemäßen polymeren Formmassen auch 35 bis 65 Gew.-% der Komponente A, 3 bis 18 Gew.-% der Komponente B, 3 bis 18 Gew.-% der Komponente C, 10 bis 35 Gew.-% der Komponente D, 5 bis 25 Gew.-% der Komponente E, 0 bis 3 Gew.-% der Komponente F oder deren Mischungen und 0 bis 3 Gew.-% der Komponente G oder deren Mischungen.

Insbesondere enthalten die erfindungsgemäßen polymeren Formmassen oft 40 bis 60 Gew.-% der Komponente A, 4 bis 15 Gew.-% der Komponente B, 4 bis 15 Gew.-% der Komponente C, 15 bis 30 Gew.-% der Komponente D, 6 bis 20 Gew.-% der Komponente E, 0 bis 2,5 Gew.-% der Komponente F oder deren Mischungen und 0 bis 2,5 Gew.-% der Komponente G oder deren Mischungen.

Bei einem geeigneten Verfahren zur Herstellung von polymeren Formmassen nach einem oder mehreren der Ansprüche 1 bis 15 werden Komponente A, B, C, und ggf. E und F in einem Doppelschneckenextruder über den Haupt- bzw. Seitendosiergang zugegeben, wobei die Komponente D über einen separaten Seitendosiergang zugegeben wird.

Das Verfahren kann so ausgeführt werden, dass mehrere Komponenten B, C, und ggf. E und F vor der Zugabe in den Doppelschneckenextruder physikalisch gemischt werden.

Die Erfindung betrifft auch die Verwendung der erfindungsgemäßen polymeren Formmassen nach einem oder mehreren der Ansprüche 1 bis 25 zur Herstellung von oder in Formkörpern, Filmen, Fäden und Fasern.

Bevorzugt handelt es sich bei den Formkörpern um Schalter oder Schalterteile, Schalt-Schütze, Schutzschalter, Spulenkörper, Stecker, Steckerleisten, Sicherungsgehäuse und Schutzschaltergehäuse.

Überraschenderweise wurde gefunden, dass erfindungsgemäße Formmassen aus Polyamiden, Phosphinaten, stickstoffhaltigen Synergisten oder Phosphor-Stickstoff-Flammschutzmitteln, Glasfasern und Talkum und gegebenenfalls einer Zinkverbindung eine verbesserte Glühdrahtbeständigkeit bei gleichzeitig hoher Flammwidrigkeit aufweisen, während Formmassen aus Polyamiden, Phosphinaten und Phosphor/Stickstoff-Flammschutzmitteln, die zusätzlich entweder nur Glasfasern oder Talkum und gegebenenfalls eine Zinkverbindung enthalten, entweder geringere Flammwidrigkeit oder geringere Glühdrahtbeständigkeit aufweisen.

Als Komponente A enthalten die erfindungsgemäßen Formmassen 30 bis 70 Gew.-% eines thermoplastischen Polyamids, wie sie z.B. in der DE-A-199 20 276 beschrieben werden. Bevorzugt handelt es sich bei den Polyamiden um solche vom Aminosäure-Typ und/oder vom Diamin-Dicarbonsäure-Typ. Bevorzugt handelt es sich bei den Polyamiden um Polyamid 6, Polyamid 12, teilaromatische Polyamide und/oder Polyamid 66. Die Formmassen können aber auch Polyamide enthalten, die durch Copolymerisation zweier oder mehrerer Monomeren erhältlich sind, oder Mischungen mehrerer Polyamide enthalten, wobei das Mischungsverhältnis beliebig ist.

Unter protonierten Stickstoffbasen werden bevorzugt die protonierten Basen von Ammoniak, Melamin, Triethanolamin, insbesondere NH₄⁺, verstanden.

Geeignete Phosphinate sind in der PCT/WO 97/39053 beschrieben, auf die ausdrücklich Bezug genommen wird.

Besonders bevorzugte Phosphinate sind Aluminium-, Calcium- und Zinkphosphinate.

Kondensationsprodukte des Melamins sind z. B. Melem, Melam oder Melon bzw. höher kondensierte Verbindungen dieses Typs sowie Gemische derselben und können z. B. durch ein Verfahren hergestellt werden, wie es in WO-A-96/16948 beschrieben ist.

Bevorzugt handelt es sich bei den Phosphor/Stickstoff-Flammschutzmitteln um Umsetzungsprodukte des Melamins mit Phosphorsäure oder kondensierten Phosphorsäuren bzw. Umsetzungsprodukte von Kondensationsprodukten des Melamins mit Phosphorsäure oder kondensierten Phosphorsäuren sowie Gemische der genannten Produkte.

Unter den Umsetzungsprodukten mit Phosphorsäure oder kondensierten Phosphorsäuren versteht man Verbindungen, die durch Umsetzung von Melamin oder den kondensierten Melaminverbindungen, wie Melam, Melem oder Melon etc., mit Phosphorsäure entstehen. Beispiele hierfür sind Dimelaminphosphat, Dimelaminpyrophosphat, Melaminphosphat, Melaminpyrophosphat, Melaminpolyphosphat, Melampolyphosphat, Melonpolyphosphat und Melempolyphosphat bzw. gemischte Polysalze, wie sie z. B. in der WO 98/39306 beschrieben sind.

Als Komponente D enthalten die erfindungsgemäßen Formmassen 5 bis 60 Gew.-% eines faserförmigen Verstärkungsstoffes. Bevorzugte faserförmige Verstärkungsstoffe sind Kohlenstofffasern, Kaliumtitanatfasern, Aramidfasern, Naturfasern, Glasgewebe, Glasmatten und besonders bevorzugt Glasfasern. Zur besseren Verträglichkeit mit dem thermoplastischen Polyamid können die Glasfasern mit Oberflächenmodifizierungen wie einer Schlichte und einem Haftvermittler ausgerüstet sein. Die Einarbeitung dieser Glasfasern kann sowohl in Form von Kurzglasfasern als auch in Form von Endlossträngen (Rovings) erfolgen. Die verwendeten Glasfasern haben einen Durchmesser im Bereich von 5 bis 25 µm und im fertigen Spritzgussteil liegt die mittlere Teilchenlänge der Glasfasern im Bereich von 0,1 bis 2 mm.

Als Komponente E enthalten die erfindungsgemäßen Formmassen 2 bis 30 Gew.-% eines Füllstoffes. Bevorzugte Füllstoffe sind amorphe Kieselsäure, Bariumsulfat, Magnesiumcarbonat, Calciumcarbonat, Kaolin, Titandioxid, gepulverter Quarz, Glimmer, Feldspat, Wollastonit, Silikate und besonders bevorzugt Talkum. Talkum ist ein hydratisiertes Magnesiumsilikat der Zusammensetzung Mg₃[(OH)₂/Si₄O₁₀] oder 3MgO · 4SiO₂ · H₂O. Je nach Talkumtyp können Beimengungen von Chlorit, Dolomit und Carbonaten enthalten sein. Zur besseren Verträglichkeit mit dem thermoplastischen Polyamid kann das Talkum mit einer Oberflächenbeschichtung ausgerüstet sein. Das verwendete Talkum hat eine mittlere Teilchengröße von 0,1 bis 40 µm, bevorzugt 0,5 bis 30 µm, besonders bevorzugt 1 bis 20 µm.

Die Mengenverhältnisse der Komponenten A, B, C, D, E, F und G in der Polyamidformmasse hängen wesentlich vom vorgesehenen Anwendungsgebiet ab und können in weiten Grenzen variieren, wie vorstehend ausgeführt.

Die vorgenannten Additive und Verstärkungsstoffe (Komponenten B bis G) können in den verschiedensten Verfahrensschritten in den Kunststoff eingebracht werden. So ist es bei Polyamiden möglich, Additive und Verstärkungsstoffe bereits zu Beginn oder am Ende der Polymerisation/Polykondensation oder in einem folgenden Compoundierprozess auf üblichen Extrudern oder Knetern in die Polymerschmelze einzumischen. Dabei können die Komponenten B bis G einzeln oder über entsprechende Vormischungen zugesetzt werden. Es ist auch möglich, als Komponente A ein pulverförmiges Polyamid einzusetzen, das beispielsweise durch Vermahlung erhalten wurde und mit den Komponenten B bis G vor einem weiteren Verarbeitungsschritt entsprechend abzumischen. Weiterhin gibt es Verarbeitungsprozesse bei denen die Additive und Verstärkungsstoffe erst später zugefügt werden. Dies wird insbesondere beim Einsatz von Pigment- oder Additivmasterbatchen praktiziert, die entsprechende Zuschlagstoffe in einem geeigneten Trägermaterial enthalten. Außerdem besteht die Möglichkeit, insbesondere pulverförmige Additive auf das durch den Trocknungsprozess eventuell warme Polymergranulat aufzutrommeln.

Bevorzugt liegen die vorgenannten Additive und Verstärkungsstoffe (Komponenten B bis G) als Granulat, Schuppen, Faser, Feinkorn, Pulver und/oder Micronisat vor.

Bevorzugt werden die Komponenten B und C als physikalische Mischung der Feststoffe, als Schmelzmischung, als Kompaktat, als Extrudat oder in Form eines Masterbatches zugesetzt. Optional können in solche Mischungen bereits die vorgenannten Komponenten E und/oder F und ggf. G eingearbeitet werden.

Die Erfindung betrifft auch Formkörper, Filme, Fäden und Fasern, die aus den erfindungsgemäßen Polyamidformmassen hergestellt werden, bevorzugt Formkörper, welche in der Elektroindustrie z.B. als Schalter oder Schalterteile, Schalt-Schütze, Schutzschalter, Spulenkörper, Stecker, Steckerleisten, Sicherungsgehäuse, Schutzschaltergehäuse etc. Anwendung finden.

### Beispiele

### 1. Eingesetzte Komponenten

Komponente A:
   Polyamid 6.6, Granulat (Ultramid^{®} A 3 Natur, Fa. BASF AG, D)
Komponente B:
   Aluminiumsalz der Diethylphosphinsäure, Pulver, im Folgenden als DEPAL bezeichnet.
Komponente C:
   Melaminpolyphosphat, Pulver, im Folgenden als MPP bezeichnet, (Melapur^{®} 200, Fa. Ciba Melapur, NL)
Komponente D:
   Glasfaser (Vetrotex^{®} EC10 4,5MM 983, Fa. St. Gobain Vetrotex, F)
Komponente E/1:
   Talkum, Pulver (Jetfine 3 C A, Fa. Luzenac Europe, F)
KomponenteE/2:
   Talkum, Pulver (Luzenac 1445, Fa. Luzenac Europe, F)
Komponente F:
   Zinkborat, Pulver (Firebrake^{®} 500, Fa. U.S. Borax, USA)

### 2. Herstellung, Verarbeitung und Prüfung von flammwidrigen und glühdrahtbeständigen Kunststoff-Formmassen

Die Herstellung der Formmassen erfolgte auf einem gleichlaufenden Doppelschneckenextruder (Typ Leistritz ZSE 27 HP 44 D) bei einem Temperaturprofil von 280°C am Haupttrichter abfallend auf 255°C an der Extruderdüse, einer Schneckendrehzahl von 250 Umdrehungen pro Minute und einem Durchsatz von 20 kg pro Stunde. Unter diesen Bedingungen resultierte eine Massetemperatur an der Düse von ca. 280°C. Die Komponente A (PA 6.6 als Granulat) wurde über den Haupteinzug zugegeben, die pulverförmigen Komponenten B, C, E und F wurden über eine erste Seitendosiereinheit und Komponente D (Glasfasern) über eine zweite Seitendosiereinheit zugegeben. Wenn in einem Versuchsansatz mehrere Komponenten B, C, E und F zugegeben wurden, wurden diese vor der Zugabe in einem Taumelmischer physikalisch gemischt und dann entsprechend zugegeben. Die Komponenten wurden in dem in den Tabellen angegebenen Verhältnis verarbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 °C Allrounder) bei einer Temperatureinstellung des Zylinders von 270°C am Einzug bis 300°C an der Düse und einer Formtemperatur von 80°C zu Prüfkörpern verarbeitet und anhand des UL 94-Vertikaltests auf Flammwidrigkeit und anhand der Norm IEC 60695-2-13 auf Glühdrahtbeständigkeit geprüft und klassifiziert. Für die Prüfung nach UL 94 wurden Prüfkörper der Abmessungen 127 mm x 12,7 mm x 0,8 mm, bzw. 127 mm x 12,7 mm x 1,6 mm, für die Prüfung der Glühdrahtbeständigkeit Prüfkörper der Abmessungen 60 mm x 60 mm x 1 mm, bzw. 60 mm x 60 mm x 2 mm hergestellt.

Die Bestimmung der Flammwidrigkeit wurde anhand des UL 94-Vertikaltests (Underwriter Laboratories Inc., Standard for Safety, Test for Flammability of Plastic Materials for Parts in Devices and Appliances, ISBN 0-7629-0082-2) durchgeführt. Diese Prüfung wird in großem Maße auf dem Gebiet der Elektrotechnik und Elektronikanwendungen zur Abschätzung des Brandverhaltens eingesetzt und erlaubt eine Einstufung der geprüften Materialien bei Einwirkung einer externen Zündquelle in Form einer offenen Flamme. Bewertet werden die Nachbrennzeiten, das Nachglühverhalten und das Abtropfverhalten der Prüfkörper. Für die Einstufung eines flammwidrigen Kunststoffs in die Klasse V-0 müssen die folgenden Kriterien erfüllt sein: bei einem Satz von fünf Prüfkörpern dürfen alle Proben nach zweimaliger Beflammung von 10 Sekunden Dauer mit einer offenen Flamme mit definierter Höhe nicht länger als 10 Sekunden nachbrennen. Die Summe der Nachbrennzeiten bei 10 Beflammungen von fünf Prüfkörpern darf nicht größer als 50 Sekunden sein. Zudem darf kein brennendes Abtropfen oder vollständiges Abbrennen erfolgen und die Summe aus Nachbrenn- und Nachglühzeit des jeweiligen Prüfkörpers darf 30 Sekunden nicht überschreiten. Zur Einstufung in die Klasse V-1 wird verlangt, dass die Einzelnachbrennzeiten nicht länger als 30 Sekunden betragen und dass die Summe der Nachbrennzeiten von 10 Beflammungen von fünf Proben nicht größer als 250 Sekunden ist. Zudem darf kein brennendes Abtropfen oder vollständiges Abbrennen erfolgen und die Summe aus Nachbrenn- und Nachglühzeit des jeweiligen Prüfkörpers darf 60 Sekunden nicht überschreiten. Eine Einstufung in die Klasse V-2 erfolgt dann, wenn es bei Erfüllung der übrigen Kriterien, wie sie für die Einstufung in die Klasse V-1 gelten, zu einem brennenden Abtropfen kommt. Werden die oben genannten Kriterien nicht erfüllt, erfolgt die Bewertung n.k. = nicht klassifizierbar als V-0, V-1 oder V-2. Die Einstufung in die Klasse V-0 entspricht einer hohen Flammwidrigkeit und wird von einer Reihe von Anwendungen im Elektrobereich als Anforderung gestellt.

Die Bestimmung der Glühdrahtbeständigkeit erfolgte anhand der IEC 60695-2-13. In dieser Prüfung wird der so genannte GWIT-Wert bestimmt. GWIT steht für *glow-wire ignition temperature* ("Glühdrahtentzündungstemperatur") und gibt die Temperatur an, die um 25 K (30 K bei Prüftemperaturen zwischen 900°C und 960°C) höher liegt als die Temperatur an der Spitze des Glühdrahts, bei der es bei einer Prüfung an drei Prüfkörpern gegebener Dicke zu keiner Entzündung kommt. Entzündung wird dabei definiert als eine Flammenbildung, die länger als fünf Sekunden andauert. Auch diese Prüfung ist auf dem Gebiet der Elektrotechnik und Elektronikanwendungen von Bedeutung, da Bauelemente in elektronischen Erzeugnissen im Fehlerfall, wie beispielsweise bei einem Kurzschluss oder bei Überlastung derart hohe Temperaturen annehmen können, dass sich Bauelemente in unmittelbarer Nähe der Strom führenden Leiter entzünden können. Dieses Verhalten wird in der Glühdrahtprüfung nachempfunden. Insbesondere für unbeaufsichtigte Haushaltsgeräte und elektrischen Strömen größer 0,2 A wird It. der "Hausgerätenorm" nach IEC 60335-1, Teil 30 "Widerstand gegen Wärme und Feuer" (4. Ausgabe, Mai 2001) für bestimmte Bauteile beispielsweise ein GWIT nach IEC 60695-2-13 von mindestens 775°C gefordert.

Sämtliche Versuche der jeweiligen Serie wurden aufgrund der Vergleichbarkeit unter identischen Bedingungen (Temperaturprogramme, Schneckengeometrien, Spritzgießparameter, etc.) durchgeführt. Die Prüfkörper wurden vor den jeweiligen Prüfungen eine Woche bei 23°C und 50 % relativer Luftfeuchtigkeit gelagert.

Die Tabelle 1 zeigt Vergleichsbeispiele von Polyamidformmassen basierend auf PA 6.6 (Komponente A), gegebenenfalls dem Aluminiumsalz der Diethylphosphinsäure (DEPAL; Komponente B), gegebenenfalls dem Phosphor/Stickstoff-Flammschutzmittel Melaminpolyphosphat (MPP; Komponente C), gegebenenfalls Zinkborat (Komponente F), die entweder Glasfasern (Komponente D) oder Talkum (Komponente E1 bzw. E2) oder eine Kombination aus Glasfasern und Talkum aber keine Komponente B, C oder F enthalten. Alle Mengen sind als Gew.-% angebeben.

Die Ergebnisse der Beispiele, in denen Polyamidformmassen gemäß der Erfindung gefertigt wurden (Kombination der Komponente D mit Komponente E1 bzw. Komponente E2 bei gleichzeitiger Zugabe von Komponenten B, C und F), sind in Tabelle 2 aufgelistet. Alle Mengen sind als Gew.-% angegeben.
Polyamide ohne den Zusatz von Flammschutzmitteln weisen erwartungsgemäß nur eine schlechte Flammwidrigkeit und geringe Glühdrahtbeständigkeit auf (Vergleichs-beispiele V1 bis V5). Aus den Vergleichsbeispielen V6 bis V8 wird ersichtlich, dass beim alleinigen Einsatz von Glasfasern oder Talkum in den Polyamidformmassen mit Flammschutzmitteln entweder eine gute Flammwidrigkeit (Klasse V-0 im UL 94-Vertikaltest) bei nicht ausreichender Glühdrahtbeständigkeit (GWIT von 750°C) oder nicht ausreichende Flammwidrigkeit (Klasse V-1 im UL 94-Vertikaltest) bei ausreichender Glühdrahtbeständigkeit (GWIT von 775°C) erreicht wird.

Aus den erfindungsgemäßen Beispielen A1 und A2 geht hervor, dass bei der Kombination von Glasfasern und Talkum in den Polyamidformmassen sowohl eine hohe Flammwidrigkeit (Klasse V-0 im UL 94-Vertikaltest) als auch eine hohe Glühdrahtbeständigkeit (GWIT von 775°C oder höher) erreicht wird bei insgesamt konstanter Dosierung der Flammschutzmittel (Komponenten B und C). Damit kann mit ein und derselben Polyamidformmasse (erfindungsgemäße Beispiele A1 und A2) ein größerer Anwendungsbereich abgedeckt werden, als es mit Polyamidformmassen der Vergleichsbeispiele V6, V7 oder V8 möglich ist.

**Tabelle 1:**

| Vergleichsbeispiele (Versuchsreihe 1): Polyamidformmassen basierend auf PA 6.6 (Komponente A), gegebenenfalls dem Aluminiumsalz der Diethylphosphinsäure (DEPAL; Komponente B), gegebenenfalls dem Phosphor/Stickstoff-Flammschutzmittel Melaminpolyphosphat (MPP; Komponente C), gegebenenfalls Zinkborat (Komponente F), die entweder Glasfasern (Komponente D) oder Talkum (Komponente E1 bzw. E2) oder eine Kombination aus Glasfasern und Talkum aber keine Komponente B, C oder F enthalten. | | | | | | | | | |
|---|---|---|---|---|---|---|---|---|---|
| Vergleich | A [%] | B [%] | C [%] | D [%] | E1 [%] | E2 [%] | F [%] | Klasse nach UL 94 Vertikaltest (0,8 mm /1,6 mm) | GWIT / IEC 60695-2-13 [°C] (1 mm/2 mm) |
| V1 | 70 | 0 | 0 | 30 | 0 | 0 | 0 | n.k.*/n.k. | 675/700 |
| V2 | 70 | 0 | 0 | 0 | 30 | 0 | 0 | n.k./n.k. | 675/675 |
| V3 | 70 | 0 | 0 | 0 | 0 | 30 | 0 | n.k./n.k. | 675/675 |
| V4 | 70 | 0 | 0 | 20 | 10 | 0 | 0 | n.k./n.k. | 675/700 |
| V5 | 70 | 0 | 0 | 20 | 0 | 10 | 0 | n.k./n.k. | 675/700 |
| V6 | 52 | 11,4 | 5,7 | 30 | 0 | 0 | 0,9 | V-0/V-0 | 750/750 |
| V7 | 52 | 11,4 | 5,7 | 0 | 30 | 0 | 0,9 | V-1/V-1 | 775/775 |
| V8 | 52 | 11,4 | 5,7 | 0 | 0 | 30 | 0,9 | V-1/V-1 | 775/775 |

| | | | | | | | | | |
|---|---|---|---|---|---|---|---|---|---|
| * n.k. = nicht klassifizierbar als V-0, V-1 oder V-2 | | | | | | | | | |

**Tabelle 2**

| Erfindungsgemäße Beispiele: Polyamidformmassen basierend auf PA 6.6 (Komponente A), dem Aluminiumsalz der Diethylphosphinsäure (DEPAL; Komponente B), dem Phosphor/Stickstoff-Flammschutzmittel Melaminpolyphosphat (MPP; Komponente C), Zinkborat (Komponente F), die sowohl Glasfasern (Komponente D) als auch Talkum (Komponente E1 bzw. E2) enthalten. | | | | | | | | | |
|---|---|---|---|---|---|---|---|---|---|
| Erfindungsgemäß | A [%] | B [%] | C [%] | D [%] | E1 [%] | E2 [%] | F [%] | Klasse nach 94 Vertikaltest (0,8 mm /1,6 mm) | GWIT/IEC 60695-2-13 [°C] (1 mm/2 mm) |
| A1 | 52 | 11,4 | 5,7 | 20 | 10 | 0 | 0,9 | V-0/V-0 | 775/800 |
| A2 | 52 | 11,4 | 5,7 | 20 | 0 | 10 | 0,9 | V-0/V-0 | 775/800 |

## Patentansprüche

1. Verwendung von polymeren Formmassen auf Basis von thermoplastischen Polyamiden, enthaltend
als Komponente A 40 bis 60 Gew.-% eines thermoplastischen Polyamides,
als Komponente B 4 bis 15 Gew.-% eines Phosphinsäuresalzes der Formel (I) und/oder eines Diphosphinsäuresalzes der Formel (II) und/oder deren Polymeren, 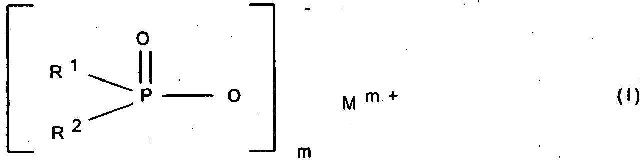 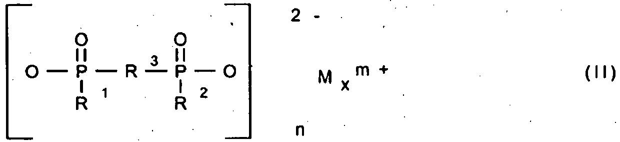 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4; n 1 bis 4; x 1 bis 4 bedeuten,
als Komponente C 4 bis 15 Gew.-% eines stickstoffhaltigen Synergisten oder eines Phosphor/Stickstoff-Flammschutzmittels,
als Komponente D 15 bis 30 Gew.-% eines faserförmigen Verstärkungsstoffes,
als Komponente E 6 bis 20 Gew.-% eines Füllstoffes,
als Komponente F 0,1 bis 2,5 Gew.-% einer organischen oder anorganischen Zinkverbindung oder Mischungen verschiedener Zinkverbindungen und
als Komponente G 0,1 bis 2,5 Gew.-% übliche Zusatzstoffe und Verarbeitungshilfsmittel, wobei die Summe der Komponenten A bis G immer 100 Gew.-% beträgt, zur Herstellung von Formkörpern, die gleichzeitig eine hohe Flammwidrigkeit nach UL 94 und eine hohe Glühdrahtbeständigkeit nach IEC 60695-2-13 aufweisen.

2. Verwendung nach Anspruch 1, **dadurch gekennzeichnet, dass** es sich bei den Polyamiden um Polyamid 6, Polyamid 12, teilaromatische Polyamide und/oder Polyamid 66 handelt und Formmassen eingeschlossen sind, die Polyamide enthalten, die durch Copolymerisation zweier oder mehrerer Monomeren erhältlich sind, oder Mischungen mehrerer Polyamide enthalten, wobei das Mischungsverhältnis beliebig ist.

3. Verwendung nach Anspruch 1 oder 2, **dadurch gekennzeichnet, dass** R¹, R² der Komponente B gleich oder verschieden sind und Methyl, Ethyl, n-Propyl, iso-Propyl, n-Butyl, tert.-Butyl, n-Pentyl und/oder Phenyl bedeuten und R³ der Komponente B Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

4. Verwendung nach einem oder mehreren der Ansprüche 1 bis 3, **dadurch gekennzeichnet, dass** M der Komponente B Ca, Al oder Zn bedeutet.

5. Verwendung nach einem oder mehreren der Ansprüche 1 bis 4, **dadurch gekennzeichnet, dass** es sich bei der Komponente C um eine Stickstoffverbindung der Formeln (III) bis (VIII) handelt, 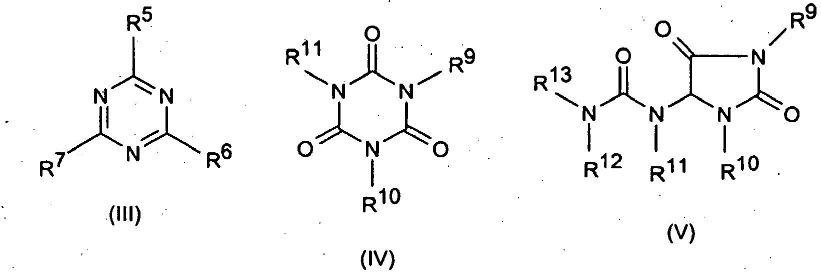 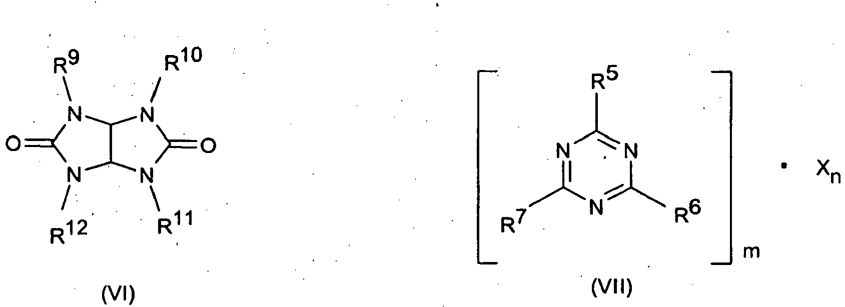 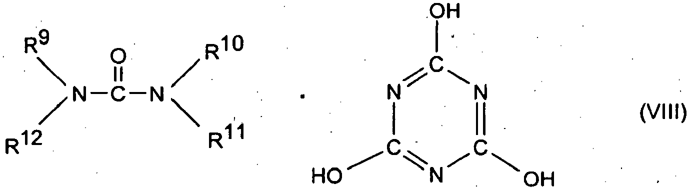 worin
R⁵ bis R⁷ Wasserstoff, C₁-C₈₋Alkyl, C₅-C₁₆-Cycloalkyl oder -Alkylcycloalkyl, möglicherweise substituiert mit einer Hydroxy- oder einer C₁-C₄-Hydroxyalkyl- Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹ , sowie N-alicyclisch oder N-aromatisch,
R⁸ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl- Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten, oder um oligomere Ester des Tris(hydroxyethyl)isocyanurats mit aromatischen Polycarbonsäuren.

6. Verwendung nach einem oder mehreren der Ansprüche 1 bis 5, **dadurch gekennzeichnet, dass** es sich bei der Komponente C um Benzoguanamin, Tris(hydroxyethyl)isocyanurat, Allantoin, Glycouril, Melamin, Melamincyanurat, Harnstoffcyanurat, Dicyandiamid und/oder Guanidin handelt.

7. Verwendung nach einem oder mehreren der Ansprüche 1 bis 6, **dadurch gekennzeichnet, dass** es sich bei der Komponente C um Kondensationsprodukte des Melamins, insbesondere um Melem, Melam, Melon und/oder höherkondensierte Verbindungen davon handelt.

8. Verwendung nach einem oder mehreren der Ansprüche 1 bis 6, **dadurch gekennzeichnet, dass** es sich bei der Komponente C um Dimelamin-pyrophosphat, Melaminpolyphosphat, Melempolyphosphat, Melampolyphosphat, Melonpolyphosphat und/oder gemischte Polysalze dieses Typs handelt.

9. Verwendung nach einem oder mehreren der Ansprüche 1 bis 6, **dadurch gekennzeichnet, dass** es bei der Komponente C um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

10. Verwendung nach einem oder mehreren der Ansprüche 1 bis 9, **dadurch gekennzeichnet, dass** es sich bei der Komponente D um Glasfasern, insbesondere um Kurzglasfasern oder Endlosstränge (Rovings) handelt.

11. Verwendung nach einem oder mehreren der Ansprüche 1 bis 10, **dadurch gekennzeichnet, dass** es sich bei der Komponente E um Talkum handelt.

12. Verwendung nach einem oder mehreren der Ansprüche 1 bis 11, **dadurch gekennzeichnet, dass** es sich bei der Komponente F um Zinkoxid, Zinkborat, Zinksulfid, Zinkstearat und/oder Zinkmontanat handelt.

13. Verwendung nach einem oder mehreren der Ansprüche 1 bis 12, **dadurch gekennzeichnet, dass** es sich bei der Komponente G um Zusatzstoffe und Verarbeitungshilfsmittel wie Pigmente, Farbstoffe, Wachse, Nukleierungsmittel, Gleit- und Entformungshilfsmittel, Weichmacher, Lichtschutzmittel, Stabilisatoren, Antioxidantien, Metalldesaktivatoren, Antistatika oder Mischungen derartiger Additive handelt.

## Claims

1. Use of a polymeric molding composition based on thermoplastic polyamides, comprising,
as component A, from 40 to 60% by weight of a thermoplastic polyamide,
as component B, from 4 to 15% by weight of a phosphinic salt of the formula (I) and/or of a diphosphinic salt of the formula (II), and/or polymers of these, 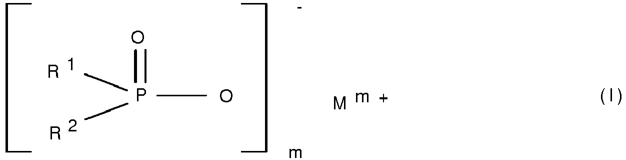 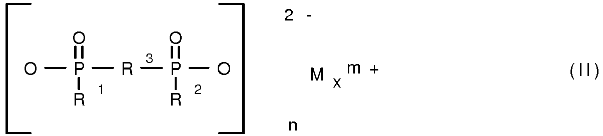 where
R¹ and R² are identical or different and are C₁-C₆-alkyl, linear or branched, and/or aryl;
R³ is C₁-C₁₀-alkylene, linear or branched, C₆-C₁₀-arylene, -alkylarylene, or -arylalkylene;
M is Mg, Ca, Al, Sb, Sn, Ge, Ti, Zn, Fe, Zr, Ce, Bi, Sr, Mn, Li, Na, K, and/or a protonated nitrogen base;
m is from 1 to 4; n is from 1 to 4; x is from 1 to 4,
as component C, from 4 to 15% by weight of a nitrogen-containing synergist, or of a phosphorus/nitrogen flame retardant,
as component D, from 15 to 30% by weight of a fibrous reinforcing material,
as component E, from 6 to 20% by weight of a filler,
as component F, from 0.1 to 2.5% by weight of an organic or inorganic zinc compound, or a mixture of various zinc compounds, and
as component G, from 0.1 to 2.5% by weight of conventional additives and processing aids, where the entirety of components A to G always amounts to 100% by weight, for the production of moldings which simultaneously have high flame retardancy according to UL 94 and high glow-wire resistance according to IEC 60695-2-13.

2. The use as claimed in claim 1, wherein the polyamides are nylon-6, nylon-12, semiaromatic polyamides, and/or nylon-6,6, and molding compositions are included which comprise polyamides which are obtainable via copolymerization or two or more monomers, or which comprise a mixture of two or more polyamides, the mixing ratio here being as desired.

3. The use as claimed in claim 1 or 2, wherein R¹ and R² of component B are identical or different and are methyl, ethyl, n-propyl, isopropyl, n-butyl, tert-butyl, n-pentyl, and/or phenyl and R³ of component B is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methyl-naphthylene, ethylnaphthylene or tert-butylnaphthylene; phenylmethylene, phenyl-ethylene, phenylpropylene or phenylbutylene.

4. The use as claimed in one or more of claims 1 to 3, wherein M of component B is Ca, Al, or Zn.

5. The use as claimed in one or more of claims 1 to 4, wherein component C is a nitrogen compound of the formulae (III) to (VIII) 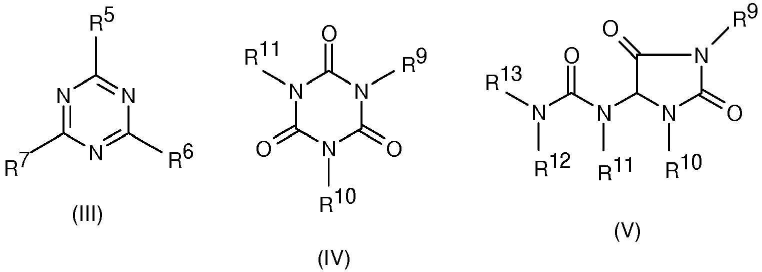 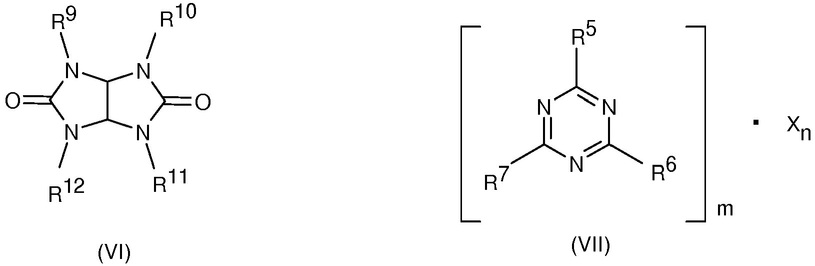 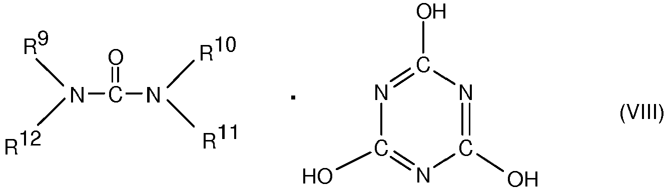 where
R⁵ to R⁷ are hydrogen, C₁-C₈-alkyl, or C₅-C₁₆-cycloalkyl or -alkylcycloalkyl, where appropriate substituted with a hydroxy function or with a C₁-C₄-hydroxyalkyl function, C₂-C₈-alkenyl, or C₁-C₈-alkoxy or -acyl or -acyloxy, or C₆-C₁₂-aryl or -arylalkyl, or -OR⁸ or -N(R⁸)R⁹, including systems of N-alicyclic or N-aromatic type,
R⁸ is hydrogen, C₁-C₈-alkyl, or C₅-C₁₆-cycloalkyl or -alkylcycloalkyl, where appropriate substituted with a hydroxy function or with a C₁-C₄-hydroxyalkyl function, C₂-C₈-alkenyl, or C₁-C₈-alkoxy or -acyl or -acyloxy, or C₆-C₁₂-aryl or -arylalkyl,
R⁹ to R¹³ are groups identical with R⁸ or else -O-R⁸,
m and n, independently of one another, are 1, 2, 3, or 4,
X are acids which can form adducts with triazine compounds (III), or are oligomeric esters of tris(hydroxyethyl) isocyanurate with
aromatic polycarboxylic acids.

6. The use as claimed in one or more of claims 1 to 5, wherein component C is benzoguanamine, tris(hydroxyethyl) isocyanurate, allantoin, glycouril, melamine, melamine cyanurate, urea cyanurate, dicyandiamide, and/or guanidine.

7. The use as claimed in one or more of claims 1 to 6, wherein component C is condensates of melamine, in particular melem, melam, melon and/or higher-condensation-level compounds thereof.

8. The use as claimed in one or more of claims 1 to 6, wherein component C is dimelamine pyrophosphate, melamine polyphosphate, melem polyphosphate, melam polyphosphate, melon polyphosphate, and/or mixed polysalts of this type.

9. The use as claimed in one or more of claims 1 to 6, wherein component C is nitrogen-containing phosphates of the formulae (NH₄)_{y} H_{3-y} PO₄ or (NH₄ PO₃)_{z}, where y is from 1 to 3 and z is from 1 to 10 000.

10. The use as claimed in one or more of claims 1 to 9, wherein component D is glass fibers, in particular short glass fibers or continuous-filament strands (rovings).

11. The use as claimed in one or more of claims 1 to 10, wherein component E is talc.

12. The use as claimed in one or more of claims 1 to 11, wherein component F is zinc oxide, zinc borate, zinc sulfide, zinc stearate, and/or zinc montanate.

13. The use as claimed in one or more of claims 1 to 12, wherein component G is additives and processing aids, such as pigments, dyes, waxes, nucleating agents, lubricants, mold-release agents, plasticizers, light stabilizers, other stabilizers, antioxidants, metal deactivators, antistatic agents, or a mixture of additives of this type.

## Revendications

1. Utilisation de matériaux de moulage polymères à base de polyamides thermoplastiques, contenant
en tant que composant A, 40 à 60 % en poids d'un polyamide thermoplastique,
en tant que composant B, 4 à 15 % en poids d'un sel de l'acide phosphinique de formule (I) et/ou d'un sel de l'acide diphosphinique de formule (II) et/ou leurs polymères 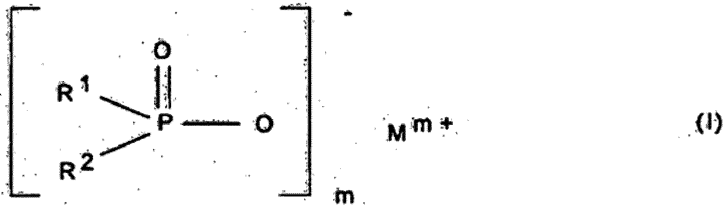 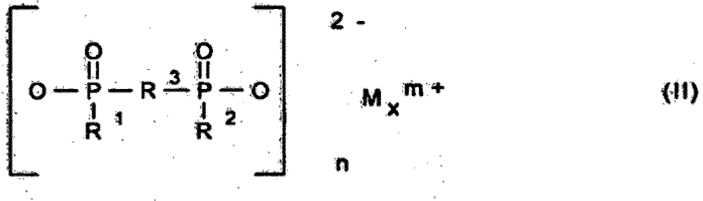 dans lesquelles
R¹, R² sont identiques ou différents, et signifient alkyle en C₁-C₆, linéaire ou ramifié, et/ou aryle ;
R³ signifie alkylène en C₁-C₁₀, linéaire ou ramifié, arylène, alkylarylène ou arylalkylène en C₆-C₁₀;
M signifie Mg, Ca, Al, Sb, Sn, Ge, Ti, Zn, Fe, Zr, Ce, Bi, Sr, Mn, Li, Na, K et/ou une base azotée protonée ;
m signifie 1 à 4 ; n signifie 1 à 4 ; x signifie 1 à 4,
en tant que composant C, 4 à 15 % en poids d'un synergiste azoté ou d'un agent ignifuge phosphore/azote,
en tant que composant D, 15 à 30 % en poids d'une matière de renforcement fibreuse,
en tant que composant E, 6 à 20 % en poids d'une charge,
en tant que composant F, 0,1 à 2,5 % en poids d'un composé de zinc organique ou inorganique ou de mélanges de différents composés de zinc, et
en tant que composant G, 0,1 à 2,5 % en poids d'additifs et adjuvants d'usinage usuels, la somme des composants A à G étant toujours de 100 % en poids,
pour la fabrication de corps moulés qui présentent simultanément une résistance à la flamme élevée selon UL 94 et une résistance à un filament incandescent élevée selon IEC 60695-2-13.

2. Utilisation selon la revendication 1, **caractérisée en ce que** les polyamides sont le polyamide 6, le polyamide 12, des polyamides partiellement aromatiques et/ou le polyamide 66, et les matériaux de moulage qui contiennent des polyamides pouvant être obtenus par copolymérisation de deux monomères ou plus, ou des mélanges de plusieurs polyamides, le rapport de mélange étant quelconque, sont inclus.

3. Utilisation selon la revendication 1 ou 2, **caractérisée en ce que** R¹, R² du composant B sont identiques ou différents, et signifient méthyle, éthyle, n-propyle, iso-propyle, n-butyle, tert.-butyle, n-pentyle et/ou phényle, et R³ du composant B signifie méthylène, éthylène, n-propylène, iso-propylène, n-butylène, tert.-butylène, n-pentylène, n-octylène ou n-dodécylène ; phénylène ou naphtylène ; méthyl-phénylène, éthyl-phénylène, tert.-butylphénylène, méthyl-naphtylène, éthyl-naphtylène ou tert.-butylnaphtylène ; phényl-méthylène, phényl-éthylène, phényl-propylène ou phényl-butylène.

4. Utilisation selon une ou plusieurs des revendications 1 à 3, **caractérisée en ce que** M du composant B signifie Ca, Al ou Zn.

5. Utilisation selon une ou plusieurs des revendications 1 à 4, **caractérisée en ce que** le composant C est un composé azoté des formules (III) à (VIII) 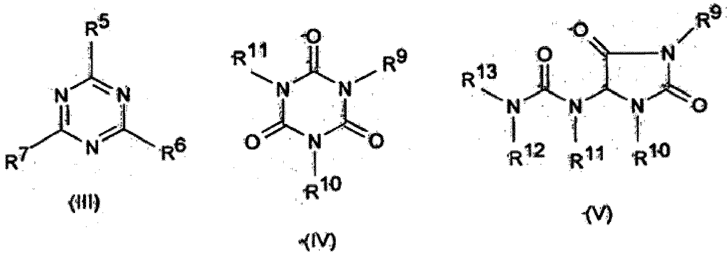 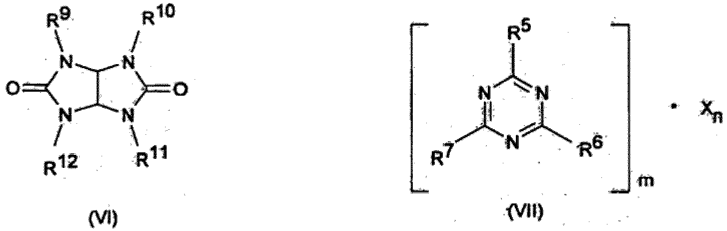 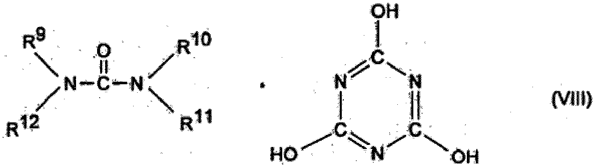 dans lesquelles
R⁵ à R⁷ signifient hydrogène, alkyle en C₁-C₈, cycloalkyle ou alkylcycloalkyle en C₅-C₁₆, éventuellement substitué avec une fonction hydroxy ou hydroxyalkyle en C₁-C₄, alcényle en C₂-C₈, alcoxy, acyle, acyloxy en C₁-C₈, aryle ou arylalkyle en C₆-C₁₂, -OR⁸ et -N(R⁸)R⁹, ainsi que N-alicyclique ou N-aromatique,
R⁸ signifie hydrogène, alkyle en C₁-C₈, cycloalkyle ou alkylcycloalkyle en C₅-C₁₆, éventuellement substitué avec une fonction hydroxy ou hydroxyalkyle en C₁-C₄, alcényle en C₂-C₈, alcoxy, acyle, acyloxy en C₁-C₈, ou aryle ou arylalkyle en C₆-C₁₂,
R⁹ à R¹³ signifient les mêmes groupes que R⁸, ainsi que -O-R⁸,
m et n signifient indépendamment les uns des autres 1, 2, 3 ou 4,
X signifie des acides, qui peuvent former des adduits avec des composés de triazine (III), ou des esters oligomères de l'isocyanurate de tris(hydroxyéthyle) avec des acides polycarboxyliques aromatiques.

6. Utilisation selon une ou plusieurs des revendications 1 à 5, **caractérisée en ce que** le composant C est la benzoguanamine, l'isocyanurate de tris(hydroxyéthyle), l'allantoïne, le glycourile, la mélamine, le cyanurate de mélamine, le cyanurate d'urée, le dicyandiamide et/ou la guanidine.

7. Utilisation selon une ou plusieurs des revendications 1 à 6, **caractérisée en ce que** le composant C correspond à des produits de condensation de la mélamine, notamment le mélem, le mélam, le melon et/ou leurs composés condensés supérieurs.

8. Utilisation selon une ou plusieurs des revendications 1 à 6, **caractérisée en ce que** le composant C est le pyrophosphate de dimélamine, le polyphosphate de mélamine, le polyphosphate de mélem, le polyphosphate de mélam, le polyphosphate de melon et/ou les polysels mixtes de ce type.

9. Utilisation selon une ou plusieurs des revendications 1 à 6, **caractérisée en ce que** le composant C correspond à des phosphates azotés de formule (NH₄)_{y}H_{3-y}PO₄ ou (NH₄PO₃)_{z}, avec y = 1 à 3 et z = 1 à 10 000.

10. Utilisation selon une ou plusieurs des revendications 1 à 9, **caractérisée en ce que** le composant D correspond à des fibres de verre, notamment des fibres de verre courtes ou des filaments infinis (stratifils).

11. Utilisation selon une ou plusieurs des revendications 1 à 10, **caractérisée en ce que** le composant E est le talc.

12. Utilisation selon une ou plusieurs des revendications 1 à 11, **caractérisée en ce que** le composant F est l'oxyde de zinc, le borate de zinc, le sulfure de zinc, le stéarate de zinc et/ou le montanate de zinc.

13. Utilisation selon une ou plusieurs des revendications 1 à 12, **caractérisée en ce que** le composant G correspond à des additifs et des adjuvants d'usinage, tels que des pigments, des colorants, des cires, des agents de nucléation, des lubrifiants et des adjuvants de démoulage, des plastifiants, des agents photoprotecteurs, des stabilisateurs, des antioxydants, des désactivateurs de métaux, des antistatiques ou des mélanges de tels additifs.
